# EUROPEAN PATENT APPLICATION

(11) **EP 2 897 057 A1**
(43) Date of publication of application: **22.07.2015**
(21) Application number: 13837290.9
(22) Date of filing: 07.08.2013
(51) Int. Cl.: G06F 17/30, G06F 3/048

(54) **USER INTERFACE DEVICE, SEARCH METHOD, AND PROGRAM**

(30) Priority: 13.09.2012 JP 2012201320
(71) Applicant: NTT DOCOMO, INC., Chiyoda-ku Tokyo 100-6150 (JP)
(72) Inventor: ENDOU, Satoshi, Tokyo 100-6150 (JP); MIYAMOTO, Fumie, Tokyo 100-6150 (JP)
(74) Representative: Hoffmann Eitle
(86) International application number: PCT/JP2013/071378
(87) International publication number: WO 2014/041931

(57) **Abstract**

A user interface device includes: a detection unit that detects an inputting action to select a displayed object corresponding to a subject; and a generation unit that generates a query based on an inputting action detected by the detection unit, wherein the generation unit generates a query for a combination of a plurality of subjects upon detection of an inputting action to select a plurality of displayed objects corresponding to a plurality of subjects by a predetermined algorithm.

## Description

### Technical Field

Present invention relates to a user interface (UI).

### Background

There is an increasing demand for an easy to use user interface of an electronic device such as a smartphone, for example. Specifically, there is a demand for a device that can be used without difficulty by elderly people or users who are not good at inputting instructions to the device. In this connection, there are devices developed in which an easy-operation mode is implemented in addition to a normal-operation mode. Patent Document 1 discloses a technology of determining attributes of a user, such as age or gender of a user based on facial characteristics of the user and displaying an operation screen depending on the attributes.

### List of Prior Art

### Patent Document

Patent Document 1: JP2011-059194A

### Summary of the Invention

### Problem to be solved by the Invention

In general, a UI, which is easy to use, is often not suitable for inputting complicated instructions. It is a case where a UI designed for easy input of instructions by a particular set of user actions is not enabled to accept inputs made by user actions other than a predetermined set of user actions. An object of the present invention is to enable a user to conduct a search for a combination of subjects without difficulty.

### Means for Solving the Problem

In an aspect of the present invention, a user interface device including: a detection unit that detects an inputting action to select a displayed object corresponding to a subject; and a generation unit that generates a query based on an inputting action detected by the detection unit, wherein the generation unit generates a query for a combination of a plurality of subjects upon detection of an inputting action to select a plurality of displayed objects corresponding to a plurality of subjects by a predetermined algorithm.

In another aspect of the present invention, the generation unit generates a query for a combination of a plurality of subjects corresponding to a first displayed object and a second displayed object when an inputting action to select the second displayed object is detected within a predetermined length of time after a detection of an inputting action to select the first displayed object by the detection unit.

In another aspect of the present invention, the generation unit generates a query for a combination of a plurality of subjects corresponding to a plurality of displayed objects, to each of which an inputting action has been made, when the inputting action is not detected within the predetermined length of time.

In another aspect of the present invention, the generation unit generates a query for a combination of a plurality of subjects corresponding to a plurality of displayed objects, to each of which a first inputting action to select a displayed object is made, when the first inputting action is detected prior to a detection of a predetermined second inputting action which is different from the first inputting action.

In another aspect of the present invention, the generation unit generates a query for a combination of a plurality of subjects corresponding to a plurality of displayed objects when an inputting action to select the plurality of displayed objects is detected within a predetermined length of time by the detection unit.

In another aspect of the present invention, the generation unit generates a query for a combination of displayed objects to each of which an inputting action has been detected by the detection unit so far, when the inputting action is no longer detected.

In another aspect of the present invention, the user interface device further includes a display controller that displays a plurality of displayed objects so as to inform a user of the inputting action corresponding to the predetermined algorithm.

In another aspect of the present invention, the generation unit generates a query by weighing the plurality of subjects based on an order in which the plurality of displayed objects to each of which an inputting action is detected by the detection unit.

In another aspect of the present invention, there is provided a search algorithm including: detecting an inputting action to select a displayed object corresponding to a subject; and generating a query based on the detected inputting action, wherein the query is generated for a combination of a plurality of subjects upon detection of an inputting action to select a plurality of displayed objects corresponding to a plurality of subjects by a predetermined algorithm.

In yet another aspect of the present invention, there is provided a program that causes a computer to execute: detecting an inputting action to select a displayed object corresponding to a subject; and generating a query based on the detected inputting action, wherein the query is generated for a combination of a plurality of subjects upon detection of an inputting action to select a plurality of displayed objects corresponding to a plurality of subjects by a predetermined algorithm.

### Effects of the Invention

According to the present invention, a search for a combination of subjects can be conducted without difficulty.

### Brief Description of the Drawings

FIG. 1 shows a block diagram showing an overall configuration of an information search system.
FIG. 2 is a block diagram showing a hardware configuration of a communication terminal.
FIG. 3 is a block diagram showing a functional configuration of the communication terminal.
FIG. 4 shows an example of a search screen.
FIG. 5 is a flowchart of a search.

### Description of Reference Numerals

10···information search system, 100···communication unit, 110···main controller, 111···detection unit, 112···generation unit, 113···obtaining unit, 114···display controller, 120···storage unit, 130···communication unit, 140 ···touch screen, 141···display, 142···sensor, 200···search server, 300··· network

### Modes for carrying out the Invention

### Embodiment

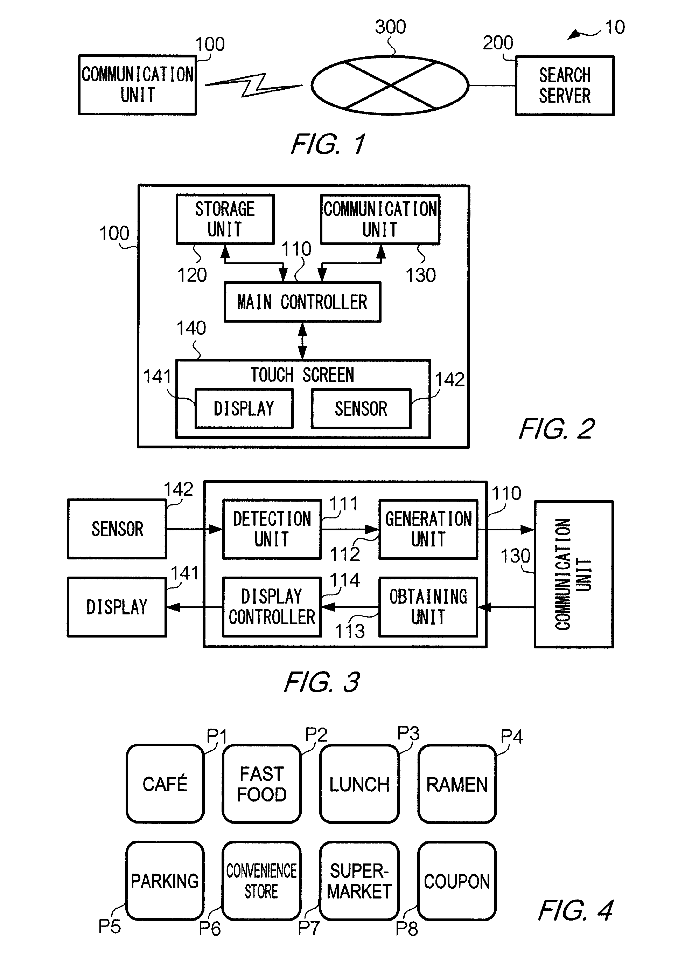

FIG. 1 is a block diagram showing an overall configuration of information search system 10 according to an embodiment of the present invention. Information search system 10 includes a communication terminal 100 and search server 200 which are connected to each other by a network 300 including a mobile communication network and the Internet.

Communication terminal 100 is an electronic device used for a search or other purposes by a user. Assuming that communication terminal 100 is a mobile communication unit, for example, a smartphone, a tablet computer etc., which is configured to receive an input made via a touch screen. The touch screen inputs are described later. Search server 200 conducts a search for a content upon receipt of a query made by communication terminal 100 and transmits a result of the search to communication terminal 100. In the present embodiment, the content is a web page. Stated otherwise, search server 200 generates a search result which includes a list of URLs (UNIFOORM RESOURCE LOCATORs) of web pages satisfying a search condition, and transmits the generated list to communication terminal 100.

FIG. 2 is a block diagram showing a hardware configuration of communication terminal 100. Communication terminal 100 includes a main controller 110, storage unit 120, communication unit 130, and touch screen 140. Communication terminal 100 may include an input device having buttons or keys instead of touch screen 140, the input device including a microphone, a speaker, or the like, which are not shown in FIG. 2.

Main controller 110 is configured to control all of the units included in communication terminal 100. Main controller 110 includes a CPU (CENTRAL PROCESSING UNIT) or other processors and a memory and controls all of the units by executing a predetermined program (s). A functionality of a user interface device according to the present invention is realized by main controller 110 performing a function based on an input made by the user via touch screen 140.

Storage unit 120 stores data. For example, storage unit 120 includes a storage medium having a hard drive and a flash memory to store data used by main controller 110 for controlling communication terminal 100. More specifically, the data stored in storage unit 120 includes a program (s) executed by main controller 110, and image data by which an image is displayed on touch screen 140. Communication unit 130 is configured to transmit and receive data via network 300. Communication unit 130 includes an antenna and a modem in conformity with a communication protocol of network 300, to perform a processing necessary for data communication, which includes modulation and demodulation of the data.

Touch screen 140 is configured to display an image and receive an input made by a user. More specifically, touch screen 140 includes a display 141 and sensor 142. Display 141 includes a screen with a liquid crystal element, an organic EL (ELECTROLUMINESCENCE) element, and a drive circuit to drive the elements, so as to display an image based on image data. Sensor 142 includes a sensor covering a screen of display 141 to output coordinates corresponding to a user's input to main controller 110. In the present embodiment, the user's input refers to an action of touching a point on the screen by his/her finger(s). The coordinates are described by a Cartesian coordinate plane in which an origin of the coordinate axes is set at a predetermined position on the screen.

FIG. 3 is a block diagram showing a functional configuration of communication terminal 100 relating to a search. The functionalities of detection unit 111, generation unit 112, obtaining unit 113, and display controller 114 are implemented by executing a predetermined program(s) by main controller 110 of communication terminal 100. A user interface device of the present invention has the functionalities described above.

Detection unit 111 is configured to detect a user's input. Detection unit 111, based on coordinates supplied by sensor 142 and an image displayed on the screen at the time of the detection, interprets what type of inputs the user made. For example, detection unit 111 is configured to detect a tapping action in which a point on the screen is touched momentarily, a double tapping in which the tapping is input two times in quick succession, and a dragging action, in which after a point on the screen is touched, the point of touch is moved by a dragging action on the screen or by other input actions made by the user.

Generation unit 112 is configured to perform a processing based on an input detected by detection unit 111. In the present embodiment, a primary functionality of generation unit 112 is a generation of a query. The query is a text string indicative of a request for a search based on a search condition the request being sent to search server 200. The text string includes at least a keyword of the subject for the search. Generation unit 112 is configured to generate a query for a single subject and a query for a combination of subjects based on the input detected by detection unit 111. The query generated by generation unit 112 is transmitted to search server 200 by communication unit 130.

Obtaining unit 113 is configured to obtain data. For example, when communication terminal 100 transmits a query, obtaining unit 113 obtains a data list of the search result from search server 200 via communication unit 130. Also, obtaining unit 113 is configured to obtain other data necessary for a search and a display of a search result.

Display controller 114 is configured to control a display performed by display 141. Display controller 114 displays a text and/or an image based on data obtained by obtaining unit 113 in display 141. For example, display controller 114 displays panels, a list of search results generated based on the data list.

Description of a configuration of information search system 10 is provided below. In the configuration, a user of communication terminal 100 conducts a search for a content using communication terminal 100 at his/her convenience. In the present embodiment, the user conducts a search by selecting an object(s) displayed on the screen of display 141 without inputting a text string.

FIG. 4 shows an example of a search screen according to the present embodiment. In the search screen shown in FIG. 4, two or more panels P1 through P8 are displayed. Panels P1 through P8 are icons, each of which indicates a predetermined subject. For example, panel P1 corresponds to a subject "café." The user selects panel P1 to search for cafés. More specifically, the user touches a corresponding icon of panel P1 to select panel PI. The user can displace the selected panel to another point by dragging the panel.

Furthermore, it is possible to designate two or more subjects by performing an inputting action(s) corresponding to the predetermined algorithm(s). For example, the user performs an inputting action to select panel P1 titled "café" and panel P8 titled "coupon" so as to conduct a search for coupons or for cafés where the coupons are distributed. The search may be an AND search corresponding to a logical product of the subjects or may be an OR search corresponding to a logical sum of the subjects.

The number of panels or details of the subjects indicated by the panels shown in Fig. 4; is one example of the present invention. The displayed subjects may vary depending on a user. For example, the subjects are prepared taking into consideration factors such as gender, age, location, or the like of a user. Moreover, communication terminal 100 may customize the screen by changing the panels and/or an arrangement of the panels in response to an instruction input by the user.

A text displayed within a panel does not necessarily coincide with a keyword of the subject for the panel. For example, when panel P8 titled " coupon" is selected, a generated query may include a keyword "voucher" instead of "coupon." Alternatively, the query may include both keywords for an OR search. In another embodiment, an image is displayed on a panel instead of a text.

In the present embodiment, a range of a search for a content may be limited to a particular web site or may be open to the whole of the Internet space. Alternatively, only contents relating to an area near a current location of a mobile terminal may be a subject for a search using a GPS (GLOBAL POSITIONING SYSTEM) or other technologies for obtaining location information, which may be referred to as "a local search." Typically, the local search is used in searching for a restaurant, a recreation facility, a hotel, or the like.

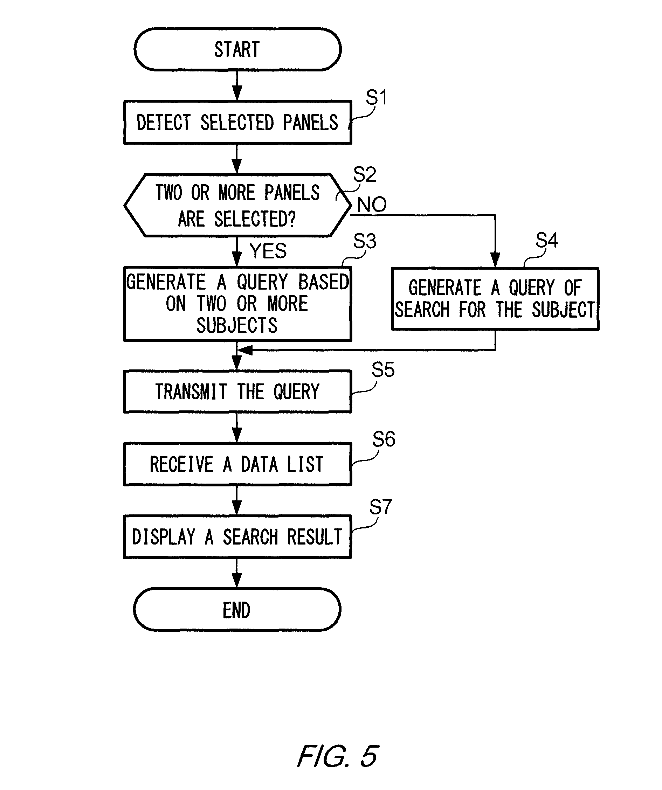

FIG. 5 is a flowchart showing a search according to the present embodiment. Upon receipt of an input of selecting one of the panels in step S1, main controller 110 of communication terminal 100 checks whether two or more panels are selected by a predetermined action (step S2). In a case where the two or more panels are selected, main controller 110 generates a query for a combination of the subjects corresponding to the selected two or more panels (step S1). In a case where two or more panels are not selected, main controller 110 generates a query corresponding to the panel selected in step S (step S4).

Main controller 110 transmits the generated query to search server 200 by communication unit 130 (step S5). Upon receipt of the query, search server 200 generates a data list based on the received query and transmits the data list to communication terminal 100. Main controller 110 receives the data list by communication unit 130 in step S6 and displays a search result corresponding to the data list in display 141 (step S7).

In the present embodiment, two or more panels can be selected by any one of the algorithms provided below. The number of selectable panels is determined in advance in the first algorithm. In the first selection algorithm, upon completion of a selection for the predetermined number of panels, communication unit 100 starts generating a query. For example, the selectable maximum number of panels is determined to be two in a case that a user rarely selects three or more subjects for a search and is therefore considered as a user who may not be good at conducting a search, so as to provide the user with a simplified search option. As a result, the user can conduct a search for a combination of subjects without having to input an action that is not familiar to the user. In an embodiment, a time limit may be provided for the selection of panels. In this case, regardless of whether or not the number of selected panels reaches a predetermined number within the time limit, communication unit 100 may generate a query based on the selected panel(s).

In a second selection algorithm, a user must finish designating all of the panels that the user wishes to select from among those displayed on the screen; once a panel is selected, by touching each panel. Stated otherwise, a selection of panels is not performed by inputting tapping actions. When the user touches all of the panels that he/she wishes to select, the selection is confirmed by lifting fingers off the screen 140 at the same time or substantially the same time. Specifically, upon detection of fingers lifted off the screen (stated otherwise, an action with regard to the panels no longer being detected) after a first touch to the panels is detected, main controller 110 starts generating a query. Unlike in the first algorithm, it is not necessary to set a maximum selectable number of panels in the second selection.

In a third selection algorithm, a time limit to select panels is set. When panels are selected within a predetermined length of time, communication unit 100 generates a query for a combination of subjects corresponding to the selected panels. For example, a time limit is set to be 3 to 5 seconds from a time of selection of the first panel. The time limit may be adjusted according to the needs of a user. Alternatively, the user may determine the time limit. In the third algorithm, execution of a search is ensured after a predetermined time period has passed.

In a fourth selection algorithm, a selection of panel(s) and a generation of a query to start a search are initiated by different inputting actions (hereinafter referred to as the first and second inputting actions, respectively). Any inputting action may be employed for the second inputting action as long as it is distinguishable from the first inputting action. For example, the user taps on panels as the first inputting action to select the panels and then taps a point of the screen other than the panels as the second inputting action. Alternatively, the first and second inputting actions may be input by an inputting means other than touch screen 140, which includes pressing of a button. Alternatively, a generation of a query is initiated when a special action, which is different from an action used for selecting panels, is input for selecting the last panel. For example, a tapping action and a double tapping action are employed as the first and second inputting actions, respectively. In this case, the second inputting action indicates a completion of a selection of panels. By doing so, the user is not constrained by a fixed number of selectable panels or a time limit set for designating panels.

In a fifth selection algorithm, a predetermined time limit is set to select each panel. Specifically, when an inputting action to select the second panel is detected within a predetermined period of time from a previous detection of an inputting action to select the first panel, which is different from the second panel, communication unit 100 generates a query for subjects corresponding to the first and second panels. After that, when an inputting action to select the third panel, which is different from the first and second panels, is detected within a predetermined period of time from the detection of the inputting action to select the second panel, communication unit 100 generates a query for a combination of subjects corresponding to the first, second, and third panels. Stated otherwise, a user is prompted to select panels one by one, each within a predetermined length of time in the fifth algorithm.

In the fifth selection algorithm, when no inputting action to select another panel within a predetermined time period after a detection of selecting a panel, communication unit 100 generates a query for a combination of subjects corresponding to all of the panels that have been selected. Stated otherwise, a search is automatically initiated in a case that the user fails to select another panel before a predetermined length of time has passed from a time at which a panel is previously selected.

Communication unit 100 may control a display for the screen to guide a user to select panels by any one of the selection algorithms described above. For example, communication unit 100 changes a color, shape or other elements of the displayed panels to show which panel(s) is being selected by the user. In a preferable embodiment, communication unit 100 may display a remaining time on the screen to prompt the user to input actions in a case where the time limit for inputting an action is implemented in a selection algorithm currently employed. In yet another preferable embodiment, communication unit 100 may inform the user of the selection algorithm currently employed by displaying a text or an image.

In view of the foregoing, according to the present embodiment it is possible to conduct a search for a single subject and a search for a combination of subjects selectively by a single screen by inputting actions on touch screen 140 in accordance with a predetermined algorithm. As a result, the user can designate a subject(s) for a search without inputting a text, a complicated search condition or a search formula.

### Modifications

The embodiments described as doable are examples of embodiments of the preset invention. It is possible to implement the present invention by other embodiments. Hereinafter, other examples of the present invention will be described. It is noted the modifications described below can be implemented alone or in combination.
(1) A search of the present invention may be a weighted search. The weighted search refers to a search in which different weights, each of which can indicates a degree of importance), are assigned to different keywords when two or more keywords each corresponding to a subject are included in a query. In the present invention, it is possible to weigh subjects based on an order of detection of inputting actions with regard to the panels corresponding to the subjects. For example, a subject corresponding to the panel selected first may have the greatest weightage or on the other hand a subject corresponding to the panel selected last may have the greatest weightage. Alternatively, communication unit 100 may detect a length of time during which the user continues to input an action to select a panel and weighs the panel in accordance with the detected length of time.
(2) In the present invention it is possible to conduct a search at a node other than a server. A search according to the present invention can be applied to a search of a desktop computer to search for a file stored in a local storage of the computer. Simply put, an application of the present invention is not limited to a device configured to generate a query and output it to another device. An application of the present invention includes a device configured to conduct a search based on a query generated by the device.
(3) A content to be searched in the present invention is not limited to a web page. A content of the present invention may be a digital document other than a web page. The digital content may be a web page in which an audio, a moving image, a game or other digital contents (or a link to a digital content) is embedded. Alternatively, a content of the present invention may be a web page in which user's reviews or comments on a content are written. Thus, the present invention can be applied to a search for any digital content including contents exemplified above.
(4) An input device of the present invention is not limited to a touch screen. The input device of the present invention may be configured to project images such as panels indicative of subjects on a desk or a wall and detect a position of a finger(s) by infrared light, or the like. An input is not necessarily made by a finger(s). It is possible to input instructions by using a stylus (stylus pen or touch pen). Thus, "a pointer" used in the present invention includes a finger(s) and other pointing devices. An inputting action of the present invention is not limited to touching a surface of the touch screen by a pointer. For example, a touch screen having a capacitive panel is configured to detect a finger(s) positioned close to the surface of the panel in addition to a finger(s) touching the panel. An input device of the present invention may be configured to detect a user's input based on a closeness of a finger(s) to the surface of the panel.
(5) A user interface device of the present invention is applicable to general electronic devices other than a smart phone or a tablet computer. For example, the present invention may be applied to a user interface of a portable gaming console, a portable music player, an electronic book reader, an electronic dictionary, a personal computer, and the like.

In addition to a user interface device, there is provided an electronic device, an information search system having the electronic device and a server, a method of searching information, and a program implemented by the user interface device in the present invention. The program can be stored on an optical disk or other storing media, or can be downloaded via a network including the Internet to a computer such that a user can install the program in the computer.

## Claims

1. A user interface device comprising:
a detection unit that detects an inputting action to select a displayed object corresponding to a subject; and
a generation unit that generates a query based on an inputting action detected by the detection unit, wherein
the generation unit generates a query for a combination of a plurality of subjects upon detection of an inputting action to select a plurality of displayed objects corresponding to a plurality of subjects by a predetermined algorithm.

2. The user interface device according to Claim 1, wherein the generation unit generates a query for a combination of a plurality of subjects corresponding to a first displayed object and a second displayed object when an inputting action to select the second displayed object is detected in a predetermined length of time after a detection of an inputting action to select the first displayed object by the detection unit.

3. The user interface device according to Claim 2, wherein the generation unit generates a query for a combination of a plurality of subjects corresponding to a plurality of displayed objects, to each of which the inputting action has been made, when the inputting action is not detected within the predetermined length of time.

4. The user interface device according to Claim 1, wherein the generation unit generates a query for a combination of a plurality of subjects corresponding to a plurality of displayed objects, to each of which a first inputting action to select a displayed object is made, when the first inputting action is detected prior to a detection of a predetermined second inputting action which is different from the first inputting action.

5. The user interface device according to Claim 1, wherein the generation unit generates a query for a combination of a plurality of subjects corresponding to a plurality of displayed objects when an inputting action to select the plurality of displayed objects is detected within a predetermined length of time by the detection unit.

6. The user interface device according to Claim 1, wherein the generation unit generates a query for a combination of displayed objects to each of which the inputting action has been detected by the detection unit so far, when the inputting action is no longer detected.

7. The user interface device according to any one of Claims 1 to 6, further comprising a display controller that displays a plurality of displayed objects so as to inform a user of the inputting action corresponding to the predetermined algorithm.

8. The user interface device according to any one of Claims 1 to 7, wherein the generation unit generates a query by weighing the plurality of subjects based on an order in which the plurality of displayed objects to each of which the inputting action is detected by the detection unit.

9. A search algorithm comprising:
detecting an inputting action to select a displayed object corresponding to a subject; and
generating a query based on the detected inputting action, wherein
the query is generated for a combination of a plurality of subjects upon detection of an inputting action to select a plurality of displayed objects corresponding to a plurality of subjects by a predetermined algorithm.

10. A program that causes a computer to execute:
detecting an inputting action to select a displayed object corresponding to a subject; and
generating a query based on the detected inputting action, wherein
the query is generated for a combination of a plurality of subjects upon detection of an inputting action to select a plurality of displayed objects corresponding to a plurality of subjects by a predetermined algorithm.
